# EUROPEAN PATENT APPLICATION

(11) **EP 2 833 672 A1**
(43) Date of publication of application: **04.02.2015**
(21) Application number: 13306111.9
(22) Date of filing: 01.08.2013
(51) Int. Cl.: H04W 36/22

(54) **Methods and systems for LTE multi-carrier load balancing based on user traffic profile**

(71) Applicant: ALCATEL LUCENT, 92100 Boulogne-Billancourt (FR)
(72) Inventor: Salvador, Omar Hernando, Naperville, IL 60563-1594 (US); Filiatrault, Charles, Montreal, Québec QC H3A 3J2 (CA); Pugeat, Jean-Michel, 91620 Nozay (FR)
(74) Representative: 2SPL Patentanwälte PartG mbB

(57) **Abstract**

A method for load balancing among carriers within a wireless communication network, this method comprising the following steps
- collecting information indicative of a user traffic profile, this user traffic profile being associated with a user equipment connected through a first carrier frequency to the wireless communication network ;
- deciding on whether to offload the traffic of the user equipment from the first carrier frequency to a second carrier frequency on the basis of at least the information indicative of the user traffic profile.

## Description

### FIELD OF THE INVENTION

The present invention relates to methods and systems for load balancing in multi-carrier wireless communications systems.

### BACKGROUND OF THE INVENTION

With rapid user LTE (Long Term Evolution) penetration, to maintain expected/current user quality of service (e.g., provide competitive user throughputs), operators are planning to deploy additional carriers (to increase capacity required with increase in subscribers). With the deployment of multiple LTE carriers (with Macro and metro cell deployments), the operators expect effective load/traffic balancing on all carriers to optimize use of additional carriers in order to meet the expected quality of service for all the users.

Otherwise, scheduled UEs on an overloaded cell will experience even worse quality-of-service (QoS) than without the deployed additional carriers.

Accordingly, LTE multi-carrier load balancing is of absolute necessity. Indeed, for cellular network operators, whose main concern is to satisfy their subscribers' expectations, traffic/load balancing among the deployed multiple carriers is one of the most important issues.

Up-to-date solutions for load balancing among carriers within LTE networks are based either on the number of connected UEs, or on the Downlink throughput (the number of utilized Physical Resource Blocks per frame). Nevertheless, it remains difficult for the eNodeB to determine which UE to move from one carrier frequency to another.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key of critical elements or to delineate the scope of these various embodiments. Its sole purpose is to present some concepts in a simplified form as a prelude to the more detailed description that is discussed later.

Some embodiments relate to methods and apparatus for providing a specific and unique capability for properly load balancing among different carriers of a LTE network providing heterogeneous services.

Some embodiments provide methods and apparatus for LTE multi-carrier load balancing based on user traffic profile.

Some embodiments provide methods and apparatus for balancing real time load among deployed carriers within an LTE networks so that maximizing the quality of service (QoS) for each attached UE.

Various embodiments relate to methods for load balancing among carriers within a wireless communication network, these methods comprising the following steps
- collecting information indicative of a user traffic profile, this user traffic profile being associated with a user equipment connected through a first carrier frequency to the wireless communication network ;
- deciding on whether to offload the traffic of the user equipment from the first carrier frequency to a second carrier frequency on the basis of at least the information indicative of the user traffic profile.

In accordance with one broad aspect, the above methods further comprise a categorization step of the user traffic profile into high data traffic user, medium traffic data user or low traffic data user. This categorization step includes a setting step of at least a threshold for user traffic profile categorizing and a comparison step of the information indicative of the user traffic profile with the set threshold.

In accordance with another broad aspect, the information indicative of the user traffic profile includes at least one the following information
- the user downlink traffic volume during a predefined preceding time period. This user downlink traffic volume may be collected per bearer quality-of-service Class Identifier (QCI) type;
- the user uplink traffic volume during a predefined preceding time period. This user uplink traffic volume may be collected per bearer quality-of-service Class Identifier (QCI) type;
- the user active time used for sending or receiving the downlink or the uplink traffic volume during a predefined preceding time period;
- the number of connections per hour and the duration of each connection.

Further, various embodiments relate to systems for load balancing among carriers within a wireless communication network, these systems comprising
- a user traffic profile manager configured for collecting information indicative of a user traffic profile, this user traffic profile being associated with a user equipment connected through a first carrier frequency to the wireless communication network ;
- an offloading decision maker configured for deciding on whether to offload the traffic of the user equipment from the first carrier frequency to a second carrier frequency on the basis of at least the information indicative of the user traffic profile.

In accordance with one broad aspect, the user traffic profile is configured to send the collected information indicative of the user traffic profile to the offloading decision maker. The collected information indicative of the user traffic profile is sent, to the offloading decision maker, during a service request (within the initial context setup request) from the user equipment toward the wireless communication.

In accordance with another broad aspect, the user traffic manager is included within a mobility management entity of the wireless network and the offloading decision maker is included within the eNodeB to which is connected the user equipment.

In accordance with another broad aspect, during a handover procedure, the indicative information of the user traffic profile is sent from the said eNodeB to the handover target eNodeB within the handover request.

In accordance with another broad aspect, the offloading decision maker is further configured to send information indicative of the user traffic profile to user traffic profile manager during the context release request (within the context release complete message) from the user equipment toward the wireless communication network.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### DESCRIPTION OF THE DRAWING

The objects, advantages and other features of various embodiments will become more apparent from the following disclosure and claims. The following non-restrictive description of preferred embodiments is given for the purpose of exemplification only with reference to the accompanying drawings in which
- FiG.1 is a schematic diagram illustrating functional entities for load balancing among carriers within a wireless communication network;
- FIG.2 and FiG.3 are two schematic diagrams illustrating interactions between LTE network nodes for load balancing among carriers.

### DETAILED DESCRIPTION OF ILLUSTRATIVE EMBODIMENTS

By analyzing user traffic profile with respect to LTE Downlink/Uplink traffic triggering, one can observe that
- about 10% of the "high" traffic data users (i.e. the largest LTE consumers) trigger about 80% of the total Downlink/Uplink traffic volume;
- the next 40% "medium" traffic data users trigger less than 20% of the total Downlink/Uplink traffic volume;
- the next 50% "lowest" traffic data users trigger less than 1% of the total Downlink/Uplink traffic volume.

Based on these observed distributions, it can be said that the user traffic profiles have a big influence on the traffic load in LTE cells, and consequently on load of carriers. For instance, if the above-mentioned 10% of the "high" traffic data users are not properly balanced across different carriers, the experienced quality-of-service will be degraded (even though there is enough capacity with the multiple deployed carriers).

In fact, if a plurality of the high traffic data users (i.e. the largest LTE consumers) are served by a carrier A, then certainly these users and eventually the other ones that are simultaneously served by this carrier A will experience a much lower quality-of-service than if they are properly balanced across different carriers (including the carrier A).

By "user traffic profile" is meant, here, a set of information describing the LTE communications behavior of a user provided with a LTE-enabled UE. A user traffic profile may include any information indicative of a user traffic profile such as:
- user Downlink/Uplink traffic volume (i.e., Kbytes received/sent) for the last n connections during the last k minutes (e.g., last 5 connections during the last 20 minutes), or more generally the user Downlink and/or the Uplink traffic volume of the most recent communication history of the UE. These Downlink/Uplink traffic volume may be collected per bearer QoS Class Identifier (QCI) type (which determines user traffic characteristics of user applications/services, eg., VoLTE call, video, real time gaming, and other best effort applications such as web browsing, file downloads, audio streaming ). This information can be used to optimize load balancing;
- user "active time" (i.e., the time required to send or receive the user packets, including retransmissions) used for sending or receiving all Downlink/Uplink traffic volume, during a preceding time period (for example, during the last k minutes);
- connection rate (i.e. number of connections per hour) and connections duration. This can be used to change the UE's carrier priorities long enough to keep it on the other carrier for the next connection (e.g., timer T320 in Idle Mode Mobility Control Info).

User traffic profiles may be categorized into different groups based on predefined thresholds relating to any of the above information indicative of the user traffic profile. In some embodiments, user traffic profiles are classified into three major groups (namely, high traffic data users, medium traffic data users, or low traffic data users) based on thresholds relating to the user Downlink or Uplink traffic volume as follows
- if the user Downlink data volume (for the collection period)
   ○ is superior to 5Mb, this user belongs to "high traffic data users" group;
   ○ is between 1 and 5Mb, this user belongs to "medium traffic data users" group;
   ○ is inferior to 1Mb, this user belongs to "low traffic data users" group;
- alternatively, if the user uplink data volume (for the collection period)
   ○ is superior to 500Kb, this user belongs to "high traffic data user" group;
   ○ between 100 Kb and 500 Kb, this user belongs to "medium traffic data users" group;
   ○ is inferior to 100kb, this user belongs to "low traffic data users" group.

The Macro/Micro eNodeB uses the above-defined "user traffic profiles", respectively, of UEs attached thereto for balancing between multiple carriers the LTE load that these UEs represent.

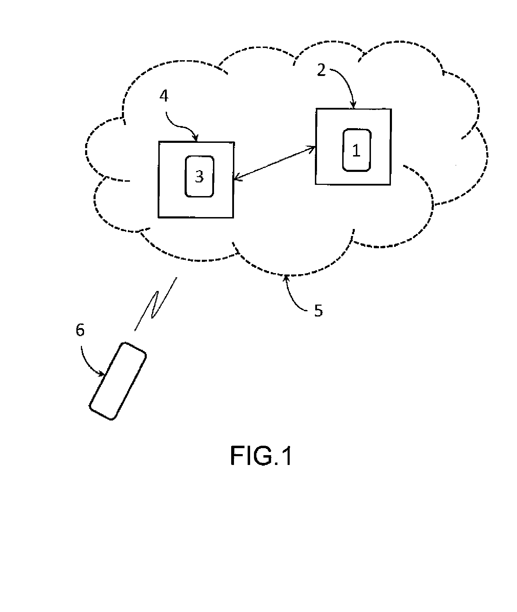

To that end and with reference to figure 1, a user traffic profile manager **1** is configured to collect and maintain the user traffic profile information. In fact, when a UE **6** attaches to LTE network **5,** the user traffic profile manager 1 creates a user traffic profile for this UE, or if such user traffic profile already exists, updates it. The user traffic profile information may be deduced by the Mobility Management Entity (MME), retrieved from the serving gateway, from the eNodeB or from any other network node within the LTE network **5.**

The user traffic profile manager **1** is preferably comprised in the Mobility Management Entity (MME) **2.** Advantageously, MME **2** is able (contrary to Macro/Micro eNodeB) to save context information when the UE **6** goes from connected to idle state.

The user traffic profile manager **1** is further configured to send the maintained user traffic profile to an offloading decision maker **3.** This offloading decision maker **3** is configured for deciding on whether to offload the traffic of the UE **6** from the carrier frequency through which it is connected to the LTE **5,** to another carrier frequency. The decision of the offloading decision maker **3** is based on the user traffic profile received from the user traffic profile manager **1.** Preferably, the offloading decision maker is included in the eNodeB **4** to which the UE **6** is connected.

The offloading decision maker **3** is further configured to send information indicative of the user traffic profile to the user traffic profile manager **1** during a context release request from the user equipment **6** toward the wireless communication network **5.**

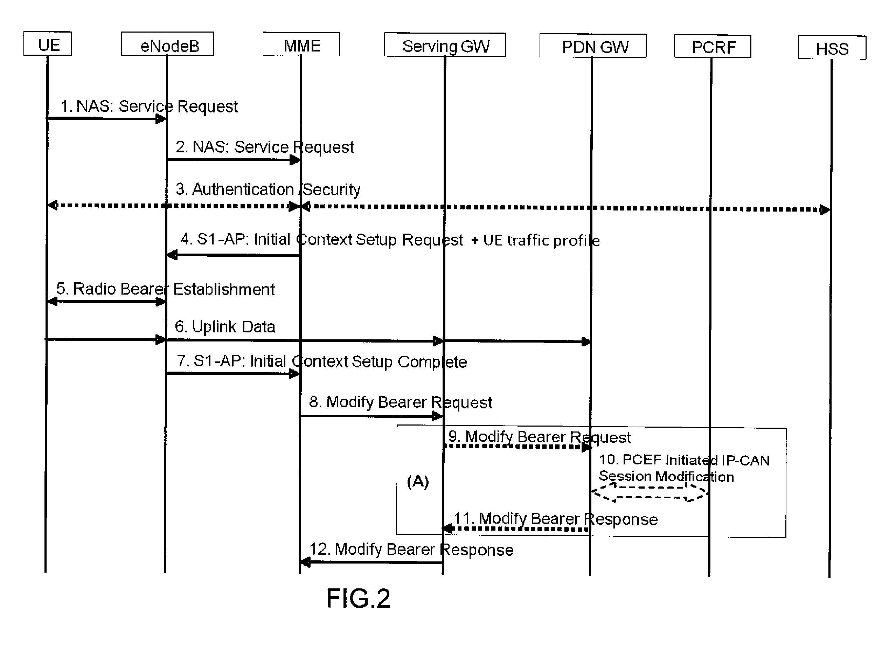

With reference now to figure 2, once a UE attaches an eNodeB during a service request (connection setups: steps 1-4 in figure 2), the MME sends (step 4 in figure 2) the user traffic profile to the eNodeB. In fact, when the UE triggers a Service Request (steps 1 and 2 in figure 2), the MME includes the current UE traffic profile in the "S1-AP Initial Context Setup Request + UE traffic profile" message and sends it to the eNodeB. Figure 1 illustrates the further conventional steps in response to the service request and which involve the serving gateway (Serving GW), the Packet Data Network gateway (PDN GW), the Policy and Charging Rules Function (PCRF), the Policy and Charging Enforcement Function (PCEF), and the Home Subscriber Server (HSS).

Subsequently, based on the received user traffic profile within the "S1-AP Initial Context Setup Request + UE traffic profile" by the eNodeB, the eNodeB (more precisely, the offloading decision maker) identifies and "tags" (i.e. marks) the UE as high, medium, or low traffic data UE, and then the eNodeB performs load balancing/rebalancing (eventually, among multiple carriers).

For instance, when cell carrier resources are unbalanced (e.g., quality-of-service in carrier A is below a predefined threshold compared to that of carrier B, or low Physical Resource Block (PRB) usage), the eNodeB rebalances the load of the UE which is tagged as "high traffic data UE" on carrier B by moving/offloading at least this "high traffic data UE" from carrier A. Therefore, the eNodeB sends the updated user traffic profile to the target eNodeB if a X2/S1 Handover event is triggered. When the UE triggers an Handover event (X2 or S1), the source eNodeB includes the UE traffic profile in the "HANDOVER REQUEST" message to the target eNodeB.

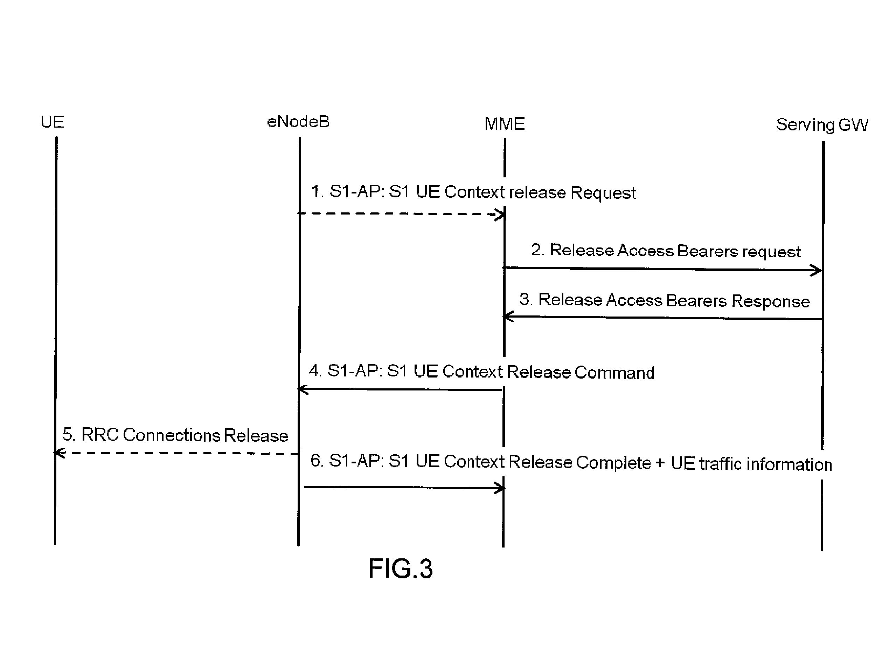

During a service release procedure (figure 3), the eNodeB sends the updated user traffic profile to the MME when the UE changes to Idle state (during S1 release procedure) (step 6 in figure 3). In fact, when the eNodeB triggers "S1-AP: S1 UE context Release" (step 1 in figure 3) the eNodeB includes the user traffic profile in the "S1-AP: S1 UE Context Release Complete" message as follows: "S1-AP: S1 UE Context Release Complete + UE traffic information". The remaining steps shown in figure 3 are conventional steps for S1 release request.

More generally, based on UE traffic profiles (received from MME or any other network node), the eNodeB tags the UE as High, Medium or low traffic data UE. In illustrative embodiment, the eNodeB may get, from user traffic profile, the total user (non-GBR bearers) traffic volume (e.g., Downlink + Uplink Kbytes received/transmitted for best effort services) and active time saved from the last n connections collected during last k minutes (e.g., "n" can be in range of 1-20 connections, k can be in range of 10-60 min). Accordingly, in this illustrative example, the eNodeB determines the class of the UE traffic profile (i.e. whether it is a high, medium or low traffic data UE) based on the user traffic volume (Downlink + Uplink traffic volume) and active time (for example, during last 20 minutes) so as to decide on whether to offload the traffic of this UE.

It is to be noted that network operators may have to approve preconfigured thresholds/parameters/history depth (i.e. duration of the preceding time period), based on the network deployment conditions, for classifying user traffic profile.

During connection set-up of an UE, the eNodeB verifies that all high/medium/low traffic data UEs in connected state thereto are properly balanced between the multiple carriers. Otherwise, the eNodeB performs the required load balancing/rebalancing based on traffic profile (as mentioned earlier, can include traffic type based on bearer QCI information) of UEs in connected state thereto.

It results in that the eNodeB is able to identify UEs with usual high data traffic usage and subsequently uses this information to properly balance the carriers. Advantageously, this leads to an optimal use of the carriers while ensuring the best quality of services for all UEs attached to the eNodeB.

In one embodiment, load balancing is performed for bearers requiring high QoS which are supported by overloaded cells. Obviously, an "unbalanced" cell/carrier causes a significant QoS degradation for served UEs.

The above-described embodiments for load balancing can significantly enhance the performance of LTE networks with heterogeneous services, decreasing call block probability of users with QoS requirements, and increasing throughput.

Advantageously, thanks to the above-described methods and systems for carrier load balancing based on UEs usual traffic rate (i.e. the user traffic profile), the eNodeB is able to identify the high traffic data users and, if needed, to effectively rebalance the carriers using this information.

## Claims

1. A method for load balancing among carriers within a wireless communication network, this method comprising the following steps
- collecting information indicative of a user traffic profile, this user traffic profile being associated with a user equipment connected through a first carrier frequency to the wireless communication network ;
- deciding on whether to offload the traffic of the user equipment from the first carrier frequency to a second carrier frequency on the basis of at least the information indicative of the user traffic profile.

2. The method of claim 1, wherein the information indicative of the user traffic profile includes at least one the following information
- the user downlink traffic volume during a predefined preceding time period;
- the user uplink traffic volume during a predefined preceding time period;
- the user active time used for sending or receiving the downlink or the uplink traffic volume during a predefined preceding time period;
- the number of connections per hour and the duration of each connection.

3. The method of the preceding claim, wherein the user downlink traffic volume and the user uplink traffic volume are collected per bearer quality-of-service Class Identifier type.

4. The method of any of the preceding claims, further comprising a categorization step of the user traffic profile, this step including a setting step of at least a threshold for user traffic profile categorizing and a comparison step of the information indicative of the user traffic profile with the set threshold.

5. A system for load balancing among carriers within a wireless communication network, this system comprising
- a user traffic profile manager (1) configured for collecting information indicative of a user traffic profile, this user traffic profile being associated with a user equipment (6) connected through a first carrier frequency to the wireless communication network (5) ;
- an offloading decision maker configured for deciding on whether to offload the traffic of the user equipment (6) from the first carrier frequency to a second carrier frequency on the basis of at least the information indicative of the user traffic profile.

6. The system of the preceding claim, wherein the user traffic profile manager (1) is configured to send the collected information indicative of the user traffic profile to the offloading decision maker (3).

7. The system of the preceding claim, wherein the collected information indicative of the user traffic profile is sent, to the offloading decision maker (3), during a service request from the user equipment (6) toward the wireless communication (5).

8. The system of the preceding claim, wherein the information indicative of the user traffic profile is sent within the initial context setup request.

9. The system of any of claims 5 to 8, wherein the user traffic profile manager (1) is included within a mobility management entity (2) of the wireless network (5).

10. The system of any of claims 5 to 9, wherein the offloading decision maker (3) is included within the eNodeB (4) to which is connected the user equipment (6).

11. The system of any of claims 5 to 10, wherein during a handover procedure, the indicative information of the user traffic profile is sent from the said eNodeB (4) to the handover target eNodeB.

12. The system of the preceding claim, wherein the information indicative of the user traffic profile is included within the handover request.

13. The system of any of claims 5 to 12, wherein the offloading decision maker (3) is further configured to send information indicative of the user traffic profile to the user traffic profile manager (1) during a context release request from the user equipment (6) toward the wireless communication network (5).

14. The system of the preceding claim, wherein the information indicative of the user traffic profile is sent within the context release complete message.

## Amended claims

### Amended claims in accordance with Rule 137(2) EPC.

1. A method for load balancing among carriers within a wireless communication network, this method comprising the following steps
- collecting information indicative of a user traffic profile, this user traffic profile being associated with a user equipment (6) connected through a first carrier frequency to the wireless communication network (5);
- deciding on whether to offload the traffic of the user equipment (6) from the first carrier frequency to a second carrier frequency on the basis of at least the information indicative of the user traffic profile,
- wherein the user traffic profile includes the number of connections per hour and the duration of each connection to change the user equipment's (6) carrier priorities.

2. The method of claim 1, wherein the information indicative of the user traffic profile includes at least one the following information
- the user downlink traffic volume during a predefined preceding time period;
- the user uplink traffic volume during a predefined preceding time period;
- the user active time used for sending or receiving the downlink or the
- uplink traffic volume during a predefined preceding time period;

3. The method of the preceding claim, wherein the user downlink traffic volume and the user uplink traffic volume are collected per bearer quality-of-service Class Identifier type.

4. The method of any of the preceding claims, further comprising a categorization step of the user traffic profile, this step including a setting step of at least a threshold for user traffic profile categorizing and a comparison step of the information indicative of the user traffic profile with the set threshold.

5. A system for load balancing among carriers within a wireless communication network (5), this system comprising
- a user traffic profile manager (1) configured for collecting information indicative of a user traffic profile, this user traffic profile being associated with a user equipment (6) connected through a first carrier frequency to the wireless communication network (5) ;
- an offloading decision maker (3) configured for deciding on whether to offload the traffic of the user equipment (6) from the first carrier frequency to a second carrier frequency on the basis of at least the information indicative of the user traffic profile,
- wherein the user traffic profile includes the number of connections per hour and the duration of each connection to change the user equipment's (6) carrier priorities.

6. The system of the preceding claim, wherein the user traffic profile manager (1) is configured to send the collected information indicative of the user traffic profile to the offloading decision maker (3).

7. The system of the preceding claim, wherein the collected information indicative of the user traffic profile is sent, to the offloading decision maker (3), during a service request from the user equipment (6) toward the wireless communication (5).

8. The system of the preceding claim, wherein the information indicative of the user traffic profile is sent within the initial context setup request.

9. The system of any of claims 5 to 8, wherein the user traffic profile manager (1) is included within a mobility management entity (2) of the wireless network (5).

10. The system of any of claims 5 to 9, wherein the offloading decision maker (3) is included within the eNodeB (4) to which is connected the user equipment (6).

11. The system of any of claims 5 to 10, wherein during a handover procedure, the indicative information of the user traffic profile is sent from the said eNodeB (4) to the handover target eNodeB.

12. The system of the preceding claim, wherein the information indicative of the user traffic profile is included within the handover request.

13. The system of any of claims 5 to 12, wherein the offloading decision maker (3) is further configured to send information indicative of the user traffic profile to the user traffic profile manager (1) during a context release request from the user equipment (6) toward the wireless communication network (5).

14. The system of the preceding claim, wherein the information indicative of the user traffic profile is sent within the context release complete message.
